**Europäisches Patentamt**

**European Patent Office**

**Office européen des brevets**

(19)

(11) Veröffentlichungsnummer : **0 189 051**
**B1**

(12) # EUROPÄISCHE PATENTSCHRIFT

(45) Veröffentlichungstag der Patentschrift :
17.05.89

(51) Int. Cl.⁴ : **B 60 R   7/04**

(21) Anmeldenummer : **86100142.8**

(22) Anmeldetag : **08.01.86**

(54) Ablageanordnung für Kraftfahrzeuge, insbesondere im Tunnelbereich von Lastkraftwagen.

(30) Priorität : **19.01.85 DE 3501714**

(43) Veröffentlichungstag der Anmeldung :
**30.07.86 Patentblatt 86/31**

(45) Bekanntmachung des Hinweises auf die Patenterteilung : **17.05.89 Patentblatt 89/20**

(84) Benannte Vertragsstaaten :
**DE FR GB IT SE**

(56) Entgegenhaltungen :
**DE--C-- 3 245 394**
**DE--U-- 7 824 091**
**GB--A-- 2 054 480**
**US--A-- 3 356 409**

(73) Patentinhaber : **Iveco Magirus Aktiengesellschaft**
**Schillerstrasse 2 Postfach 27 40**
**D-7900 Ulm/Donau (DE)**

(72) Erfinder : **Kraus, Ulrich**
**Lichtensteinstrasse 3**
**D-7900 Ulm (DE)**
Erfinder : **Egle, Elmar, Ing.-grad.**
**Sebastian-Fischer-Weg 32**
**D-7900 Ulm (DE)**

(74) Vertreter : **Socha, Peter**
**Iveco Magirus AG Postfach 2740 Schillerstrasse 2**
**D-7900 Ulm (DE)**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 189 051 B1

## Beschreibung

Die Erfindung betrifft eine Ablageanordnung für Kraftfahrzeuge, insbesondere im Tunnelbereich von Lastkraftwagen, gemäß Oberbegriff des Anspruchs 1.

Aus DE-PS 32 45 394 ist eine Ablageanordnung bekannt, wobei zwischen Fahrer- und Beifahrersitz des Lastkraftwagens unmittelbar angrenzend an das Armaturenbrett am Fahrerhausboden eine insgesamt fest montierte Tischanordnung mit Verstaumöglichkeiten separat im vorderen und hinteren Bereich vorgesehen ist. Ferner ist eine um eine Fahrzeugquerachse im mittleren Bereich der Tischanordnung schwenkbare Klappanordnung ausgebildet, die je nach Schwenkstellung entweder als vordere erhöhte Arbeitsplatte oder als hintere Aufstiegshilfe zu der bzw. den Liege(n) dient bzw. dienen. Zu letzterem Zweck weist die Klappanordnung einen zusätzlichen, stabilisierenden, umlaufenden Rohrkörper auf, der an der hinteren .Kante hochgekröpft ist, um dort einen Trittbügel zu bilden. Die insgesamt feste Montage der Tischanordnung am Fahrerhausboden ist in verschiedener Hinsicht nachteilig : Angesichts des unmittelbaren Angrenzens der Tischanordnung an das Armaturenbrett ergeben sich nur begrenzte Einbaumöglichkeiten von Bedienungs- und Anzeigeelementen im Armaturenbrettbereich. Auch ist der Zugang zu vorhandenen Bedienungs- und Anzeigeelementen zumindest teilweise erschwert bzw. unergonomisch. Vorgenannter Nachteil wirkt sich in verstärktem Maße aus, wenn die Klappanordnung die vordere Schwenkstellung einnimmt und Tischfunktion ausübt. Zumindest während der Fahrt ist die Tischfunktion beeinträchtigend für die Fahrzeugbedienung und damit kaum praktikabel. Befindet sich die Klappanordnung hingegen in der hinteren Schwenkstellung und bildet dort eine Aufstiegshilfe, so ist keine Tischfunktion gegeben. Dabei ist die Ausbildung der Aufstiegshilfe als zusätzlicher Trittbügel konstruktiv aufwendig getroffen. Im übrigen ist bei der letztgenannten Schwenkstellung der Klappanordnung der Zugang aus der Sitzposition zu der bzw. den hinteren Liegen durch den im Raum feststehenden vorderen Teil der Tischanordnung stark erschwert. Infolge der insgesamt festen Montage der Tischanordnung ergibt sich schließlich ein einengendes Raumgefühl für Fahrer und Beifahrer.

Aus DE-GM 78 24 091 ist eine Ablageanordnung der eingangs erwähnten Gattung bekannt. Bei dieser bekannten Anordnung ist der boxartig ausgebildete Kastenaufbau nur in einer hochgekippten Nichtgebrauchsstellung am oberen Rand der unteren Ablage längs verschieblich, während er zum Gebrauch in lediglich je eine in Fahrtrichtung vordere und hintere Gebrauchsstellung gleicher Höhe bringbar ist, in welcher er jeweils durch Aufsetzen einer querverlaufenden Rinne in seinem Boden auf die hintere Wand der unteren Ablage arretiert ist. Andererseits weist der boxartige Kastenaufsatz an seiner Oberseite eine von einem Kragen umgebene Öffnung auf, auf welchen ein Deckel aufsetzbar ist. Infolge der beschriebenen Ausbildung und Anordnung weist diese bekannte Ablageanordnung keine ausreichende Flexibilität hinsichtlich Höhe und Stellung (in Fahrtrichtung) der zusätzlichen oberen Arbeits- und/oder Trittfläche auf. Insbesondere ist die (ohnehin durch den umlaufenden Kragen in ihrer Wirkungsweise behinderte) obere Arbeits- und/oder Trittfläche in ihrer vorderen Gebrauchsstellung relativ weit vom Armaturenbrett entfernt. Entsprechendes gilt auch für die in der Praxis minimal erreichbare Entfernung der oberen Arbeits- und/oder Trittfläche in ihrer hinteren Gebrauchsstellung von einem hinteren Bezugsobjekt (wie beispielsweise einer hinteren Liege in einem Lastkraftwagen- Fahrerhaus), zumal der bekannte Kastenaufsatz in seiner hinteren Gebrauchsstellung leicht kippgefährdet ist.

Aufgabe der Erfindung ist die Schaffung einer Ablageanordnung für Kraftfahrzeuge der eingangs genannten Art, die die Nachteile der bekannten Anordnungen vermeidet und insbesondere einfach und kompakt aufgebaut sowie bedienungsfreundlich bei vielseitiger Anwendungsmöglichkeit ist.

Gelöst wird die der Erfindung zugrundeliegende Aufgabe dadurch, daß der Kastenaufsatz aus einer unteren oben offenen Staubox mit seitlichen von vorne nach hinten abfallenden Führungselementen und einem oberen in den abfallenden Führungselementen verschieblich geführten Tischelement besteht.

Mit Vorzug ist der Kastenaufsatz in den seitlichen horizontalen Führungsschienen der unteren Ablage in einer Weise geführt, daß Zwischenarretierungen des Kastenaufsatzes im Verschiebungsbereich möglich sind, wie auch die abfallenden Führungselemente · Zwischenarretierungen für das obere Tischelement aufweisen können, um unterschiedliche Zwischenpositionen einzustellen.

Für eine Sicherung gegen Wegnahme des Kastenaufsatzes weisen bevorzugt die seitlichen horizontalen Führungsschienen der unteren Ablage in Fahrzeuglängsrichtung hintere Blockierungen auf.

Das obere Tischelement kann bezüglich der darunter sich befindlichen Staubox nicht nur schräg verschoben werden, um die Staubox zu öffnen, sondern auch in vorteilhafter Weiterbildung der Erfindung aufgeklappt werden, und zwar bezüglich der Fahrzeuglängsrichtung nach hinten, wenn das obere Tischelement seine tiefste Stellung einnimmt.

Eine besonders vorteilhafte Ausbildung der Erfindung sieht vor, daß die untere vordere Querkante des oberen Tischelements in zumindest einer angehobenen Tischelement-Stellung zumindest teilweise auf oder an der vorderen Fahrerhausbrüstung abstützbar ist. Ein derartig abgestütztes Tischelement ist äußerst stabil, entlastet die schrägen Führungselemente und kann selbst in einer angehobenen Stellung als Trittfläche benutzt werden. Die Abstützung erfolgt hierbei zweckmäßigerweise durch zwei an der Armaturenbrettbrüstung vorgesehene seitliche im wesentlichen vertikal sich erstreckende Abstützleisten mit Querrillen oder -zähnen in Richtung Kastenaufsatz, wobei die Querrillen oder Querzähne wahlweise mit der unteren vorderen Querkante des oberen Tischelements in Eingriff gebracht werden können. Die Abstützleisten stehen bezüglich der restlichen Bedienungselemente der Fahrerhausbrüstung geringfügig nach hinten etwas vor und dienen als Anschlag für das obere Tischelement, so daß die Bedienungselemente im Armaturenbrettbereich nicht beschädigt werden können.

Durch die Erfindung wird eine einfache und wirksame Tischanordnung geschaffen, die in Form einer kompakten modulartigen Aufbau-Konstruktion ausgebildet ist und dank der verschiedenen Verschiebemöglichkeiten in Fahrzeuglängsrichtung wesentliche Nutzungsvorteile aufweist. Insbesondere ist der Zugang zum Armaturenbrett sowie den darunter bzw. dahinter befindlichen Funktionstellen und auch entsprechend der Durchstieg zwischen den Sitzen im Fahrerhaus sichergestellt. Entsprechend ist auch der Durchstieg von den Sitzen zu der bzw. den Liege(n) erleichtert. Ein weiterer wesentlicher Vorteil ergibt sich durch die Möglichkeit des separaten Einsatzes und auch des Zusammenwirkens der verschiedenen Verschiebeebenen der gesamten Tischanordnung, wodurch auch verschiedene gewünschte Tischhöhen und/oder -positionen einstellbar sind. Ber Anwendungsbereich des Erfindungsgegenstands bei unterschiedlichen Fahrzeugarten kann durch Verwendung unterschiedlicher Anzahl von Modulteilen erweitert werden. Sind als Modulteile sämtliche Kastenaufsatzeinzelteile vorgesehen, eignet sich die Erfindung bevorzugt für On Road-Fahrzeuge, bei welchen sämtliche Funktionen und entsprechender Komfort erwünscht ist. Ist der komplette Kastenaufsatz weggelassen, ist dennoch eine unterste Ablage gegeben. Eine derartige Konstruktion eignet sich insbesondere für Off Road- und entsprechende Sonderfahrzeuge. Letztgenannte Variante ermöglicht den Einbau noch weiterer Bedienungs- und Funktionselemente griffgünstig im Fahrerbereich, welche bei diesen Fahrzeugarten vorhanden sind. Befindet sich das obere Tischelement in seiner untersten die darunter sich befindliche Staubox vollständig abdeckenden Stellung, so eignet sich der Kastenaufsatz in jeder Horizontalverschiebestellung nicht nur als Ablage, sondern auch als Aufstiegshilfe zu einer hinteren Fahrerhausliege.

Die Erfindung wird nachfolgend anhand eines Ausführungsbeispiels unter Bezugnahme auf die beigefügte Zeichnung näher erläutert ; es zeigen :

Fig. 1 die Ablageanordnung in schematischer perspektivischer Ansicht in einer vorderen Stellung,

Fig. 2 die Ablageanordnung nach Fig. 1 in der hintersten Stellung verwendbar als Aufstiegshilfe, und

Fig. 3 der Kastenaufsatz nach Fig. 2 bei aufgeklapptem oberem Tischelement.

Die Ablageanordnung 10 gemäß Zeichnung befindet sich in einem Lastkraftwagenfahrerhaus zwischen Fahrer- und Beifahrersitz und umfaßt insbesondere eine untere fest auf dem Fahrerhausmitteltunnel 11 befestigte, in Fahrzeuglängsrichtung verlaufende, flache, oben offene untere Ablage 1 mit mehreren Ablagefächern unterschiedlicher Größe und einen bezüglich der unteren Ablage 1 in Fahrzeuglängsrichtung verschieblichen Kastenaufsatz 5, der im einzelnen noch beschrieben wird.

Die untere Ablage 1 erstreckt sich unmittelbar von der vorderen Fahrerhausbrüstung 8 bis zu einer hinteren (nicht veranschaulichten) Querliege im Fahrerhaus, ist horizontal angeordnet und weist entsprechend horizontale Führungsschienen 6 auf, die mit entsprechenden Zapfen des Kastenaufsatzes 5 eingreifen, so daß der Kastenaufsatz 5 insgesamt bezüglich der unteren Ablage 1 längsverschieblich ist. Die horizontalen Führungsschienen 6 weisen zudem Zwischenarretierungsstellen 7 auf, un den Kastenaufsatz 5 auch in Zwischenstellungen fixiert halten zu können.

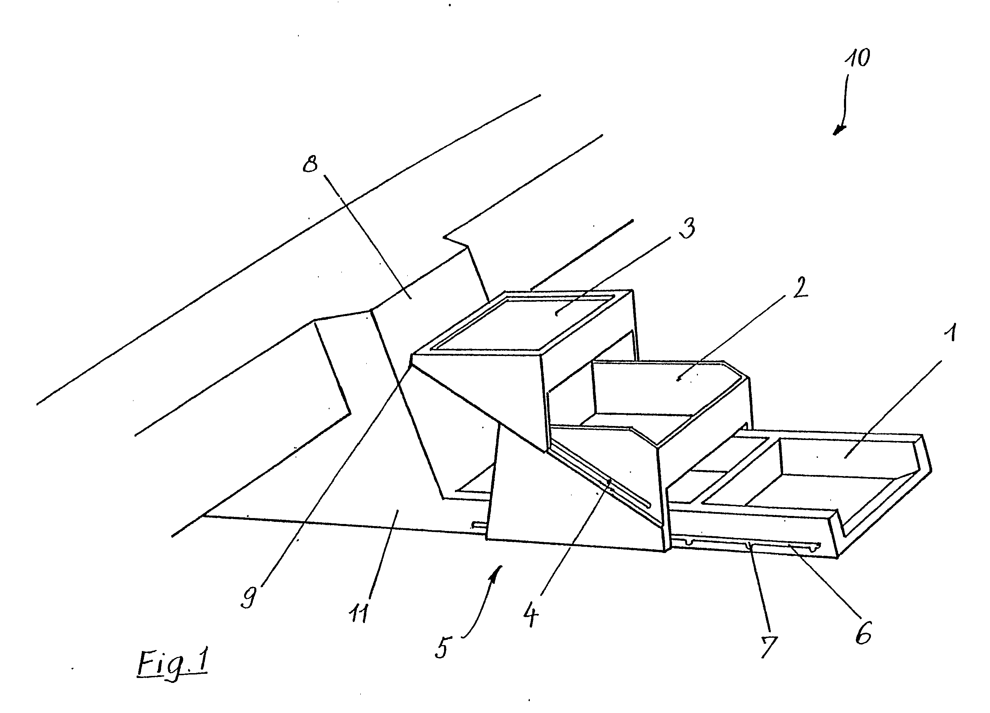

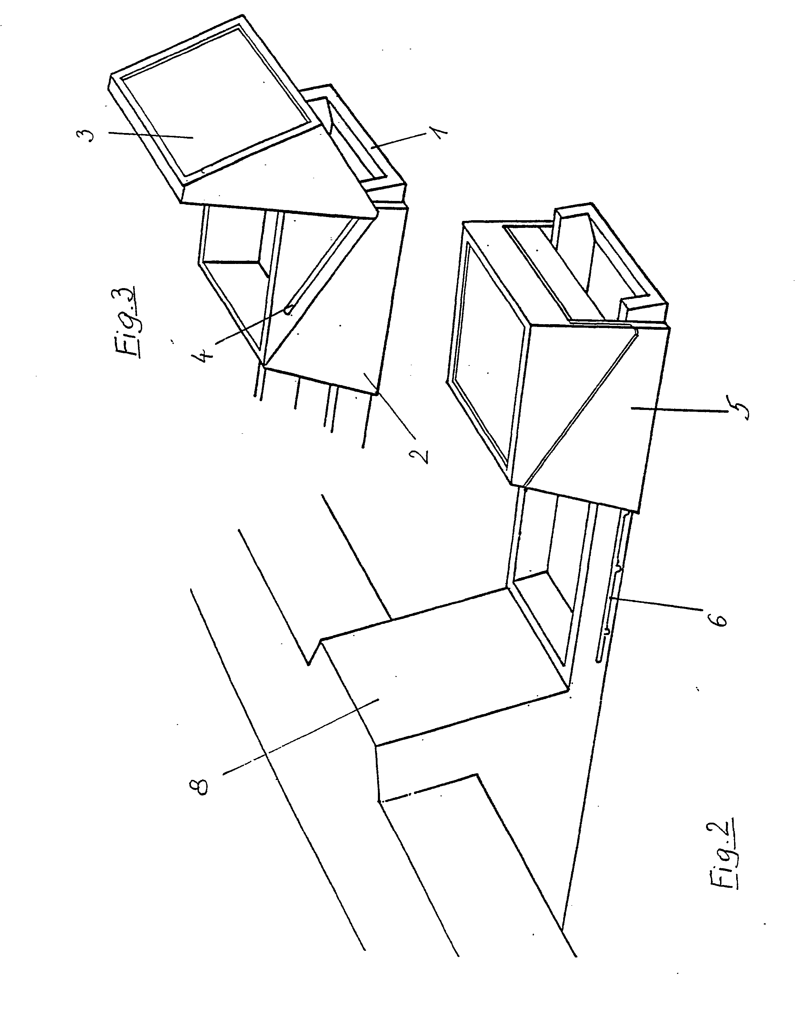

Der Kastenaufsatz 5 selbst ist gemäß Ausführungsbeispiel zweigeteilt und besteht aus einer unteren Staubox 2 mit einem oben offenen Ablagefach und seitlich nach unten gezogenen Führungswänden, die die darunter befindliche untere Ablage 1 umgreifen und die vorgenannten (nicht veranschaulichten) Führungszapfen enthalten, die in den horizontalen Führungsschienen 6 geführt sind. Ferner umfaßt der Kastenaufsatz 5 ein oberes Tischelement 3 mit schrägen Seitenwänden, die ihrerseits den oberen Bereich der Staubox 2 umgreifen und deren unterer Rand in einem Führungseingriff mit Führungselementen 4 steht, die an den Seitenwänden der Staubox 2 ausgebildet sind und bezüglich der Fahrzeuglängsrichtung von vorne nach hinten abfallen. Befindet sich mithin das obere Tischelement 3 in seiner tiefsten hinteren Stellung beispielsweise gemäß Fig. 2, ist das Ablagefach der Staubox 2 geschlossen. In dieser Gebrauchsstellung kann das obere Tischelement 3 nicht nur als obere Ablage verwendet werden, sondern auch als Tritt- oder Aufstiegshilfe für eine hintere Fahrerhausliege, aber auch dann, wenn der Kastenaufsatz 5 die in Fig. 2 gezeigte hinterste Stellung bezüglich der unteren Ablage 1 nicht einnimmt. Es kann auch das obere Tischelement 3 gemäß Fig. 3 um eine hintere untere Querachse geschwenkt und nach hinten aufgeklappt werden, um das Fach der Staubox 2 auch in dieser Stellung freizugeben.

In Fig. 1 ist das obere Tischelement 3 in einer längs der abfallenden Führungselemente 4 hochgeschobenen Lage gezeigt. In dieser Stellung eignet sich das obere Tischelement 3 bevorzugt als erhöhte Arbeitsfläche. Auch in dieser Stellung wird das Fach der Staubox 2 freigegeben. Zwischenarretierungsstellen der abfallenden Führungselemente 4 sorgen dafür, daß das obere Tischelement 3 in unterschiedlichen Höhenpositionen bezüglich der darunter sich befindlichen Staubox 2 angeordnet werden kann.

Obgleich grundsätzlich die in Fig. 1 veranschaulichte Stellung des oberen Tischelements 3 die vorderste, oberste Gebrauchslage ist, können an der vorderen Fahrerhausbrüstung 8 zwei seitliche (nicht veranschaulichte) im wesentlichen vertikal verlaufende Abstützleisten mit Querrillen oder Querzähnen vorgesehen sein, die in Richtung Kastenaufsatz 5 weisen und als Abstützung der unteren vorderen Querkante 9 des oberen Tischelements 3 dienen. Befindet sich die untere vordere Querkante 9 des oberen Tischelements 3 in einem Eingriff mit den Querrillen oder -zähnen der Abstützleisten, so ist auch in dieser Stellung das obere Tischelement 3 in Vertikalrichtung besonders stabil und kann gegebenenfalls auch in dieser Stellung als Aufstiegshilfe oder dergleichen verwendet werden. Die nach hinten vorstehenden Abstützleisten dienen ferner als Anschlag für den Kastenaufsatz 5, so daß Bedienungselemente im mittleren Fahrerhausbrüstungsbereich weitgehend geschützt sind.

Alle in der Beschreibung erwähnten und in der Zeichnung dargestellten neuen Merkmale sind erfindungswesentlich, auch soweit sie in den Ansprüchen nicht ausdrücklich beansprucht sind.

## Patentansprüche

1. Ablageanordnung (10) für Kraftfahrzeuge zwischen Fahrer- und Beifahrersitz, insbesondere im Tunnelbereich (11) von Lastkraftwegen, mit einer unteren Ablage (1) und einem über der unteren Ablage (1) angeordneten beweglichen Element, welches in unterschiedlichen Stellungen relativ zur unteren Ablage (1) zwecks Ausbildung einer zusätzlichen Arbeits- und/oder Trittfläche angeordnet werden kann wobei das Element ein Kastenaufsatz (5) ist, der bezüglich der unteren langgestreckten horizontalen flachen in Längsrichtung des Fahrzeugs angeordneten Ablage (1) längsverschieblich ist, dadurch gekennzeichnet, daß der Kastenaufsatz (5) aus einer unteren oben offenen Staubox (2) mit seitlichen von vorne nach hinten abfallenden Führungselementen (4) und einem oberen in den abfallenden Führungselementen (4) verschieblich geführten Tischelement (3) besteht.

2. Ablageanordnung nach Anspruch 1, dadurch gekennzeichnet, daß der Kastenaufsatz (5) in seitlichen horizontalen Führungsschienen (6) der unteren Ablage (1) geführt ist, die Zwischen-Arretierungsstellen (7) für den Kastenaufsatz (5) enthalten.

3. Ablageanordnung nach Anspruch 1 oder 2, dadurch gekennzeichnet, daß die abfallenden Führungselemente (4) Zwischenarretierungen für das obere Tischelement (3) enthalten.

4. Ablageanordnung nach Anspruch 2 oder 3, dadurch gekennzeichnet, daß die seitlichen horizontalen Führungsschienen (6) der unteren Ablage (1) in Fahrzeuglängsrichtung hintere Blockierungen aufweisen.

5. Ablageanordnung nach Anspruch 1 bis 4, dadurch gekennzeichnet, daß das obere Tischelement (3) bezüglich der unteren Staubox (2) nach hinten aufklappbar ist (Fig. 3).

6. Ablageanordnung nach Anspruch 1 bis 5, dadurch gekennzeichnet, daß die untere vordere Querkante (9) des oberen Tischelements (3) in zumindest einer angehobenen Tischelement-Stellung zumindest teilweise auf oder an der vorderen Fahrerhausbrüstung (8) abstützbar ist.

7. Ablageanordnung nach Anspruch 6, dadurch gekennzeichnet, daß an der vorderen Fahrerhausbrüstung (8) zwei seitliche im wesentlichen vertikal sich erstreckende Abstützleisten mit Querrillen oder -zähnen in Richtung Kastenaufsatz (5) vorgesehen sind, die wahlweise mit der unteren vorderen Querkante (9) des oberen Tischelements (3) in Eingriff bringbar sind:

## Claims

1. A storage appliance installable in a motor vehicle between the driver's and the co-driver's seats, especially in the region of the gear-box tunnel (11) of a lorry, the appliance comprising a bottom receptacle (1) and a movable element which is disposed over the bottom receptacle (1) and which, for the purpose of forming an additional work surface and/or a tread, is locatable in relation to the bottom receptacle (1) in different positions, wherein said element is a box-like headpiece (5) longitudinally slidable in relation to the oblong and shallow bottom receptacle (1) to be installed in a horizontal position in the vehicle along the latter's longitudinal direction, characterized in that the box-like headpiece (5) comprises a lower storing box (2), which is open at its top and which is provided with lateral guide elements (4) sloping from front to rear, and an upper tablelike member (3) slidably guided in the sloping guide elements (4).

2. A storage appliance according to claim 1, characterized in that the head-piece (5) is guided in horizontal guide bars (6) which are arranged on the sides of the bottom receptacle (1) and are provided with intermediate locking points (7).

3. A storage appliance according to claim 1 or claim 2, characterized in that the sloping guide elements (4) are provided with intermediate locking points for the upper table-like member (3).

4. A storage appliance according to claim 2 or claim 3, characterized in that the lateral horizontal guide bars (6) of the bottom receptacle (1) are provided with — viewed in the vehicle's longitudinal direction — rear locking means.

5. A storage appliance according to any of the claims 1 to 4, characterized in that the upper table-like member (3) is arranged to be swung out and into the rear of the lower storing box (2) (Fig. 3).

6. A storage appliance according to any of the claims 1 to 5, characterized in that at least a part of the lower transverse front edge (9) of the upper member (3) is arranged to be supported in at least one of the member's (3) lifted positions on or at the front parapet (8) of the driver's cab.

7. A storage appliance according to claim 6, characterized in that the front parapet (8) of the driver's cab is fitted with two substantially vertically extending lateral cleats having splines or teeth, which extend towards the headpiece (5) and which are selectively engageable with the lower transverse front edge (9) of the upper table-like member (3).

**Revendications**

1. Dispositif de rangement dans des véhicules automobiles entre le siège du conducteur et le siège du convoyeur, notamment dans la zone (11) du tunnel de transmission des camions, ce dispositif comportant un récepteur inférieur (1) et un élément mobile disposé au-dessus de ce récepteur inférieur (1), cet élément pouvant être placé dans différentes positions par rapport au récepteur inférieur (1), dans le but de ménager une surface supplémentaire de travail ou de marche, et cet élément étant une partie supérieure de coffre (5), qui est susceptible de se déplacer longitudinalement par rapport au récepteur inférieur (1), horizontal, allongé et plat, disposé en direction longitudinale du véhicule, dispositif caractérisé en ce que la partie supérieure de coffre (5) est constituée d'un coffre de retenue inférieur (2) ouvert vers le haut et comportant des éléments latéraux de guidage (4) inclinés dans le sens descendant de l'avant vers l'arrière, et d'un élément de table supérieur (3), guidé sur ces éléments de guidage inclinés (4) de façon à pouvoir coulisser.

2. Dispositif de rangement selon la revendication 1, caractérisé en ce que la partie supérieure de coffre (5) est guidée sur des rails de guidage latéraux (6), placés horizontalement, du récepteur inférieur (1), ces rails comportant des emplacements d'arrêt intermédiaires (7) pour la partie supérieure de coffre (5).

3. Dispositif de rangement selon la revendication 1 ou 2, caractérisé en ce que les éléments de guidage inclinés (4) comportent des arrêts intermédiaires pour l'élément de table supérieur (3).

4. Dispositif de rangement selon la revendication 2 ou 3, caractérisé en ce que les rails de guidage latéraux (6), placés horizontalement, du récepteur inférieur (1) en direction longitudinale du véhicule, comportent des blocages arrière.

5. Dispositif de rangement selon l'une des revendications 1 à 4, caractérisé en ce que l'élément de table supérieur (3) est susceptible d'être relevé vers l'arrière par rapport au coffre de retenue inférieur (2).

6. Dispositif de rangement selon l'une des revendications 1 à 5, caractérisé en ce que l'arête transversale inférieure (9), à l'avant de l'élément de table supérieur (3), est susceptible de prendre appui, tout au moins partiellement, sur ou contre l'appui avant de la cabine (8) du conducteur, lorsque l'élément de table est dans une position un peu relevée.

7. Dispositif de rangement selon la revendication 6, caractérisé en ce que sur l'appui avant (8) de la cabine du conducteur, il est prévu deux barrettes d'appui s'étendant essentiellement verticalement et comportant des rainures ou des dents transversales en direction de la partie supérieure de coffre (5), qui peuvent être amenées sélectivement en prise avec l'arête transversale inférieure antérieure (9) de l'élément de table supérieur (3).

Fig.1

Fig.3

Fig.2

EP 0 189 051 B1